# EUROPEAN PATENT SPECIFICATION

(11) **EP 3 174 679 B1**
(45) Date of publication and mention of the grant of the patent: **26.09.2018**
(21) Application number: 15762739.9
(22) Date of filing: 28.07.2015
(51) Int. Cl.: B29B 17/00, B29B 17/04, B29C 33/36, B29C 67/20

(54) **METHOD FOR MAKING A PRODUCT BY RECYCLING POLYETHYLENE FOAM AND SYSTEM FOR MAKING SAID PRODUCT**
VERFAHREN ZUR HERSTELLUNG EINES PRODUKTS DURCH RECYCLING VON POLYETHYLENSCHAUM UND SYSTEM ZUR HERSTELLUNG DIESES PRODUKTS
PROCÉDÉ DE FABRICATION D'UN PRODUIT PAR RECYCLAGE DE MOUSSE DE POLYÉTHYLÈNE ET SYSTÈME DE FABRICATION DUDIT PRODUIT

(30) Priority: 01.08.2014 IT VI20140206
(43) Date of publication of application: 07.06.2017
(73) Proprietor: Euronewpack S.r.l., 36016 Thiene (VI) (IT)
(72) Inventor: PENDIN, Flavio, I-36030 Villaverla (VI) (IT)
(74) Representative: Ziliotto, Tiziano
(86) International application number: PCT/IB2015/055693
(87) International publication number: WO 2016/016806

(56) References cited:
- WO-A1-93/19917
- DE-A1- 3 037 011
- DE-A1- 4 319 626
- US-A- 3 607 999
- US-A- 3 746 610
- US-A- 4 504 436

## Description

The invention concerns a method for making a product by using a base material constituted by polyethylene foam to be recycled. In particular, the invention concerns a method for making a product suited to be used in several fields, like for example the field of packaging, the field of building construction, the nautical field.

The invention concerns also a system for the implementation of said method, in addition to the product obtained through said method and/or system.

### DESCRIPTION OF THE STATE OF THE ART

As is known, products constituted by polyethylene foam in the shape of slabs having suitable size, thickness and/or density are widely used in many sectors. One of the most known sectors in which polyethylene foam is used is the sector of packaging. The main characteristic that is exploited in this sector, in fact, is the elasticity of polyethylene foam, which allows good absorption of the shocks to which the packed object is subjected, in particular during transport.

Other sectors in which polyethylene foam is used can be, for example, the sectors of building construction or the nautical sector.

In the sector of building construction, for example, polyethylene foam can be configured in the shape of mats and be used as a heat and/or sound insulating material. In the nautical sector, polyethylene foam can be used to fill the inside of life jackets.

In the various sectors mentioned above, and in particular in the sector of packaging, large quantities of polyethylene foam constitute waste material, both as scraps generated during the production steps and as material to be disposed of after use.

In particular, the companies that use polyethylene foam as a base material for making their products can produce a considerable quantity of waste material. Advantageously, however, this material is 100% recyclable. For this purpose, there are specialized centres equipped with plants that can receive said waste materials and carry out a suitable recycling process.

In a first recycling process of known type, waste polyethylene foam is melted and transformed into second-choice granules so that it can be used to make new slabs through an expansion process.

In a second recycling process of known type, waste polyethylene foam is ground in order to obtain a powder. A minimum percentage of said powder is reintroduced in the processing cycle when producing new slabs through expansion.

The companies that produce the waste material, therefore, need to bring it to said specialized recycling centres.

A first drawback posed by said waste material for the company is constituted by the space it occupies, resulting from the intrinsic overall dimensions of the various scraps and the empty space between said scraps.

This means that the costs for transporting the waste material to the recycling centres are not negligible.

On the market there are machines that can be installed at company premises and can melt the polyethylene foam and compact the material in ingots, thus reducing its overall dimensions and facilitating the subsequent transport operations. This type of solution, however, poses the drawback that a high quantity of power is needed, so that the power costs incurred to reduce the overall dimensions actually annul the advantage deriving from the smaller space occupied for transport purposes.

Therefore, the costs of disposal of polyethylene foam scraps still remain a problem for companies. Document DE 43 19 626 A1 discloses a method for making a product having a predetermined shape by using polyethylene foam scraps, comprising the following steps:
- fragmenting said scraps in order to obtain a plurality of fragments of polyethylene foam;
- joining said fragments together in order to obtain a single body;
- forming said single body according to said predetermined shape in order to obtain said product, and wherein said step of joining said fragments (F) together in order to obtain said single body comprises a heat treatment step during which said fragments (F) are heated, said step being suited to allow said fragments (F) to be at least partially melted and their surfaces to form a whole with one another,
wherein said steps in which said fragments (F) are joined together in order to make a single body and said single body is formed according to said predetermined shape in order to obtain said product comprise a single step in which said plurality of fragments (F) of polyethylene foam are placed into a mould that reproduces said predetermined shape, wherein said plurality of fragments (F) are pressed inside said mould.

It is the object of the invention to overcome the drawbacks mentioned above.

In particular, it is a first object of the invention to provide a method and a corresponding system that make it possible to reduce the costs companies have to bear for the disposal of polyethylene foam scraps.

It is another object of the invention to provide a method and a corrisponding system that represent an alternative to the processes of known type and make it possible to recycle polyethylene foam scraps, in particular in the cases where the scraps of polyethylene foam constitute the waste material resulting from one or more steps of the company's production processes.

It is a further object of the invention to provide a method and a system for recycling polyethylene foam that make it possible to reduce recycling times compared to the known methods and systems.

It is a further object of the invention to provide a method and a system for recycling polyethylene foam that make it possible to reduce recycling costs compared to the known methods and systems.

### SUMMARY OF THE PRESENT INVENTION

The above-mentioned problems are overcome by the teaching of the invention as defined by the independent claims.

The present invention is based on the general consideration that it is desirable to obtain a final product by using a plurality of fragments obtained from polyethylene foam scraps and conveniently joined together.

According to a first aspect, the same therefore concerns a method for making a product in a predetermined shape by using polyethylene foam scraps, wherein the method includes the following steps:
- fragmenting said scraps in order to obtain a plurality of fragments of polyethylene foam;
- joining said fragments together in order to obtain a single body;
- forming said single body according to said predetermined shape in order to obtain said product.

According to an aspect, the step of joining the fragments together in order to obtain said sinlge body comprises a heat treatment step during which the fragments are heated, said step being suited to allow the fragments to be at least partially melted and their surfaces to form a whole with one another.

Preferably, the heat treatment step includes the step in which said fragments are subjected to a heating temperature included between 80°C and 120°C, more preferably included between 90°C and 110°C, even more preferably equal to 100°C.

Preferably, the heat treatment includes the step of subjecting the fragments to the heating temperature for a time that is proportional to the thickness desired for said product.

Preferably, the heat treatment includes the step of subjecting the fragments to the heating temperature for a time included between 1 minute and 10 minutes.

In another aspect, the step of joining the fragments together includes a step in which they are joined through the addition of a bonding substance.

Preferably, the size of each one of said fragments is included between 5 mm and 35 mm, more preferably it is included between 15 mm and 25 mm, even more preferably it is substantially equal to 20 mm.

In an aspect, the step of forming the single body according to said predetermined shape in order to obtain the product comprises a step in which the single body is pressed before it cools down.

According to a first aspect, the step of forming the single body according to said predetermined shape in order to obtain the product comprises a step in which the single body is pressed immediately after the heat treatment and before it cools down.

According to another aspect, the step of forming the single body according to said predetermined shape in order to obtain the product comprises a step in which the single body is pressed immediately after the joining step through the addition of a bonding substance.

Preferably, the step of pressing the single body before it cools down is carried out at a temperature included between 50°C and 90°C, more preferably included between 70°C and 80°C, even more preferably equal to 75°C.

In another aspect, the steps of joining the fragments together in order to obtain a single body and to form the single body according to the predetermined shape in order to obtain the product comprise a single step in which the plurality of fragments of polyethylene foam are placed into a mould that reproduces the predetermined shape.

Preferably, the method comprises also a step in which the plurality of fragments are pressed inside the mould.

According to an aspect, the method comprises a further step of adding at least one additive element to said fragments before the step of joining the fragments together in order to obtain a single body.

Preferably, the additive element comprises an element belonging to the group comprising: a bonding material, a self-extinguishing material, a material with heat insulating properties, a colouring material.

Preferably, the predetermined shape of the final product is the shape of a slab. According to another aspect, the same concerns a system for making a product in a predetermined shape by using polyethylene foam scraps, wherein said system comprises:
- reduction means suited to fragment said scraps in such a way as to obtain a plurality of fragments of polyethylene foam;
- joining means suited to join said fragments together in order to make a single body;
- forming means suited to form said single body according to said predetermined shape in order to obtain said product.

Preferably, the joining means comprise heating means suited to heat said fragments, preferably an oven.

According to an aspect, the forming means comprise a pressing unit, preferably a rolling unit.

In another aspect, the forming means comprise a mould suited to receive said fragments.

The system conveniently comprises a conveyor belt positioned between the reduction means and the joining means.

Preferably, at least one section of the conveyor belt vibrates, so as to allow the substantially uniform distribution of the fragments on the belt.

According to an aspect, the system comprises a cutting unit located downstream of the forming means.

Furthermore, the system preferably comprises a feeding unit for an additive material, arranged upstream of said joining means.

In another aspect, the system comprises also a coupling unit located downstream of the joining means and suited to couple one or more layers of a material with said single body.

In a further aspect, the system comprises also a dispensing unit suited to dispense a bonding substance and located downstream of the reduction means.

In this case, the system comprises also catalyst means for said bonding substance. According to another aspect, the latter concerns a product obtained with the method or with the system just described above.

According to a further aspect, the latter concerns a product comprising a plurality of polyethylene foam fragments joined together at the level of their surface areas. According to an aspect, the fragments of polyethylene foam are joined together at the level of their surface areas through a melting process.

According to another aspect, the fragments of polyethylene foam are joined together at the level of their surface areas through the interposition of a bonding substance.

Preferably, the size of each one of said fragments is included between 5 mm and 35 mm, more preferably included between 15 mm and 25 mm, even more preferably it is substantially equal to 20 mm.

In an aspect the product obtainable according to the invention comprises, in addition to said fragments, one or more layers of a material coupled with said fragments.

Said one or more layers of coupled material preferably comprise a layer of non-fragmented polyethylene foam.

The product is preferably used as a packaging element suited to protect the objects to be packed.

Alternatively, the product is used in the building construction or nautical sector.

### BRIEF DESCRIPTION OF THE DRAWINGS

Further advantages, objectives and characteristics, as well as further embodiments of the present invention, are defined in the claims and will be clarified here below through the following description, in which reference is made to the attached drawings; in the drawings, corresponding or equivalent characteristics and/or component parts of the present invention are identified by the same reference numbers. In particular, in the drawings:
- Figure 1 schematically shows the various operations of a method that is the subject of the invention applied to a system that is also the subject of the invention;
- Figure 2 shows an enlarged sectional view of a product obtained with the system of Figure 1;
- Figure 3 shows the photograph, corresponding to Figure 2, of an enlarged sectional view of a product obtained by means of the system of Figure 1;
- Figure 4 shows a first variant embodiment of the system and of the corresponding method of Figure 1;
- Figure 5 shows another variant embodiment of the system and of the corresponding method of Figure 1;
- Figure 5A shows the use of a product obtained by means of the system of Figure 5;
- Figure 6 shows another variant embodiment of the system and of the corresponding method of Figure 1;
- Figure 7 shows an enlarged sectional view of a product obtained by means of the system of Figure 6;
- Figure 8 shows an exemplary system and the corresponding method not forming part of the invention;
- Figure 9 shows an enlarged sectional view of a product obtained by means of the system of Figure 8.

### DETAILED DESCRIPTION OF THE PRESENT INVENTION

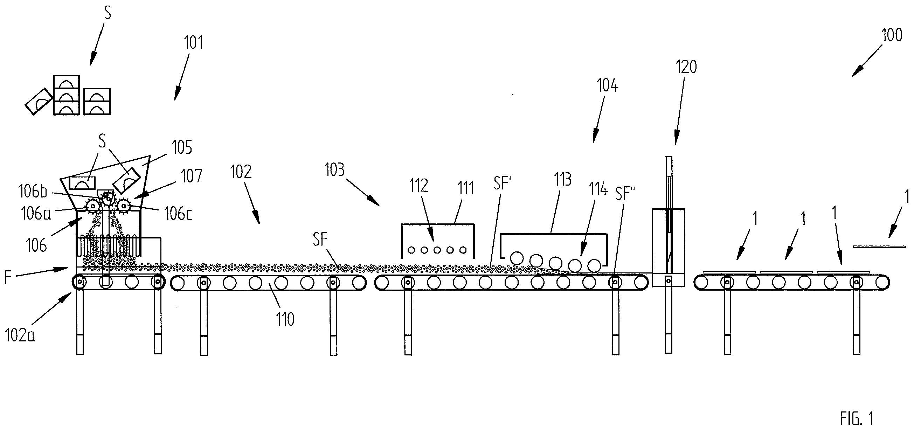

The method for making a product 1 according to the present invention is described here below with reference to the example diagram of the system 100 shown in Figure 1.

In the example of embodiment proposed herein, the system 100 is fed with scraps S of polyethylene foam. In this figure, the scraps S are represented as elements that are substantially equal to one another. It is evident, however, that the scraps that feed the system 100 can be constituted by polyethylene foam elements in any shape and size, preferably constituting scraps or non-conforming parts in production processes of specific products or constituting obsolete polyethylene foam pieces to be recycled.

By way of example, the scraps S of polyethylene foam may be constituted by the scraps resulting from the manufacture of the products used in the packaging industry or even by the products themselves once they have served their protective function as packaging material and are rejected.

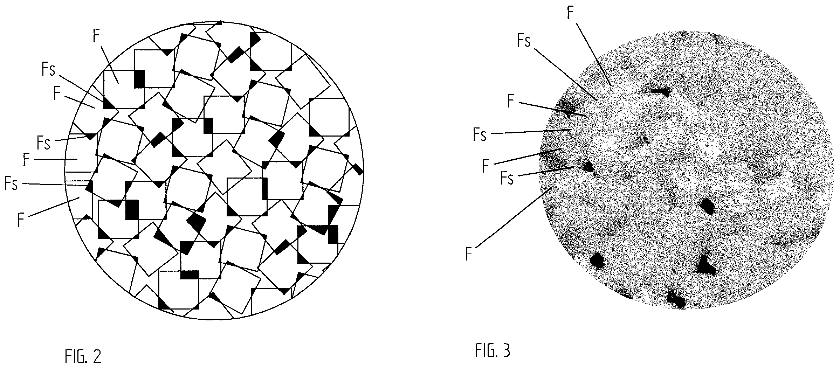

Always in the proposed example of implementation, the final product 1 is in the shape of a mat or slab, with the characteristics that will be described in greater detail below. In variant embodiments, however, the final product can assume different shapes and sizes, as illustrated for example in Figure 3 and described in greater detail below.

The system 100 substantially comprises reduction means 101, a conveyor belt 102, heating means 103 and compacting means 104.

The reduction means 101 preferably comprise a grinding unit constituted by a hopper 105, suited to receive the scraps S, and grinding means 106. The grinding means 106 preferably comprise a set of cylinders 106a, 106b, 106c placed side by side, the surface of which is provided with cutting elements or blades 107. The function of the reduction means 101 is to reduce the size of the scraps S by fragmenting the same in order to define a plurality of fragments F.

Preferably, said fragments F have a regular shape, preferably they are substantially small cubes. The size of each fragment is preferably included between 5 mm and 35 mm, more preferably included between 15 mm and 25 mm, even more preferably substantially equal to 20 mm.

In variant embodiments, the reduction means can be carried out in a different manner than illustrated and described herein, and in any case they are capable of reducing the size of the scraps S in order to obtain a plurality of fragments F in the preferred sizes described above.

For example, the reduction means may comprise heated blades.

The fragments F leaving the grinding means 106 fall on the initial portion 102a of the conveyor belt 102. Preferably, at least one portion 110 of the conveyor belt 102 is constituted by a vibrating mat 110. The function of the vibrating mat 110 is to allow the fragments F to be spread as uniformly as possible on the surface of the vibrating mat 110.

In variant embodiments of the invention, said function may be performed with different means, like for example mechanical means positioned above the conveyor belt 102 and suited to distribute the fragments uniformly on the surface of the belt 102.

The uniform or substantially uniform layer SF obtained from the fragments F on the surface of the vibrating mat 110 is conveyed towards the heating means 103. The heating means 103 comprise an oven 111 provided with heating elements 112, preferably electric resistances. More preferably, the oven 111 is also provided with ventilation means suited to define a ventilated oven.

The uniform layer SF of fragments F inside the oven 111 is subjected to a heating treatment.

Preferably, the uniform layer SF of fragments F is subjected to a heating treatment in which the temperature is preferably included between 80°C and 120°C, more preferably included between 90°C and 110°C, even more preferably equal to 100°C.

These temperatures advantageously allow the polyethylene foam to be partially melted.

Preferably, said heating treatment is performed by exposing the uniform layer SF of fragments F to the preferred temperatures for a time that is proportional to the thickness of the product to be successively obtained, as is described here below.

Preferably, the heating treatment is performed by exposing the uniform layer SF of fragments F to the heating temperature for a time included between 1 minute and 10 minutes.

This period of time is clearly determined by the speed of advance of the conveyor belt 102 inside the oven 111 and by the length of the oven 111 itself.

Preferably, the conveyor belt is advanced at a speed included between 1 and 5 metres/minute.

Advantageously, during said heating treatment the fragments F located in the uniform layer SF are subjected to a partial melting process, at least on their surface, in such a way that the external surfaces of adjacent fragments melt and are mutually joined to one another. Preferably, the temperatures and the times of the heating treatment allow the fragments F to be melted only partially, thus avoiding the complete melting of the same.

It should be noted that the value of the temperature can be maintained constant or substantially constant over time. In variant embodiments of the invention, however, the temperature can be changed according to suitable functions that are variable over time, in order to facilitate the partial melting and mutual union of the fragments F, also according to the shape and thickness of the final product 1 to be obtained.

The uniform layer of heat-treated fragments SF' starts cooling down at the end of the heating treatment, that is, when it leaves the oven 111.

The uniform layer of heat-treated fragments SF' leaving the oven 111 is then preferably subjected to a compaction operation through said compacting means 104.

The compacting means 104 preferably comprise a rolling unit 113 constituted by a set of rollers 114 that gradually reduce the thickness of the uniform layer SF' by compacting the fragments F contained therein. The rolling unit 113 is sized in such a way as to obtain as a final result a uniform layer SF" of compacted fragments F having the desired thickness in relation to the final product 1 to be obtained. The rollers 114 preferably comprise a Teflon-coated outer surface suited to prevent the fragments F from sticking to them. This problem can be avoided also by means of other solutions, for example using non-stick materials that can be applied to the outer surface of the rollers 114.

Preferably, the compacting means 104 act on the uniform layer SF' when this has not completely cooled down yet, preferably when the temperature of the same is included between 50°C and 90°C, more preferably included between 70°C and 80°C, even more preferably when it is equal to 75°C.

In variant embodiments of the invention, the compacting means can be made in a different manner, for example they can comprise a vertical press.

The uniform and compact layer SF" is thus advantageously conveyed to a cutting unit 120 that cuts it to size in order to obtain the slabs of final product 1. If required, the system 100 may comprise a unit for winding the slabs of final product 1 or, in the case where no cutting unit is provided, a winding unit for winding the uniform layer SF" on a reel.

The final product 1 obtained as described above actually comprises a plurality of fragments F of polyethylene foam, advantageously recycled, mutually joined at the level of respective surface areas Fs, as shown in the enlarged detail of Figures 2 and 2A. The union of said surface areas Fs takes place, according to the description provided above, through a melting process and the subsequent cohesion of the surface areas of adjacent fragments.

Advantageously, according to the above, the system 100 and the method implemented therein make it possible to obtain in an automatic and simple manner, preferably in a continuous manner, the final product 1 starting from scraps of polyethylene foam S.

In this way, it is possible to reduce the times and/or costs related to the recycling of polyethylene foam compared to the systems of known type.

Advantageously, the final product furthermore constitutes a new product deriving from the recycling of polyethylene foam.

In variant embodiments, however, one or more of the steps described above can be carried out in separate stations, that is, in a system not in line and thus in a not necessarily continuous process.

In a preferred application of the invention, the system is advantageously installed directly at the premises of the company that produces the scraps S. This solution makes it possible to obtain the recycled product 1 directly at the premises of the company and said recycled product 1 can be subsequently reused by the same company as a base material for its production activity. In this way, to advantage, the step of transport to the specialized recycling centres according to the known technique is eliminated and furthermore, as already explained, new base material is produced directly at the company's premises. Furthermore, the elimination of the step of transport to the specialized recycling centres makes it possible to reduce the CO2 emissions in the atmosphere produced by the means of transport, with considerable benefits in terms of environmental impact.

In another preferred applicaton of the invention, the system can be advantageously installed at specialized centres in order to perform the recycling process described above.

It should be noted that the final product 1 as described above substantially comprises only fragments of recycled polyethylene foam. Said product 1, for example, may be advantageously used again, after a further possible shaping operation, as a packaging element and be 100% recyclable.

However, in different applications the final product 1 obtained through the process described above may be advantageously coupled with other elements in order to adapt it to the specific application at hand.

In a first type of application, for example, the final product 1 (mat or slab) is preferably coupled with one or more layers of non-recycled polyethylene foam, in any case still making the assembly 100% recyclable.

In other applications, for example in the field of building construction for the production of sound absorbing or heat insulating panels, the final product 1 (mat or slab) is preferably coupled with one or more layers of other materials, like for example a layer of aluminium, a layer of rock wool, etc.

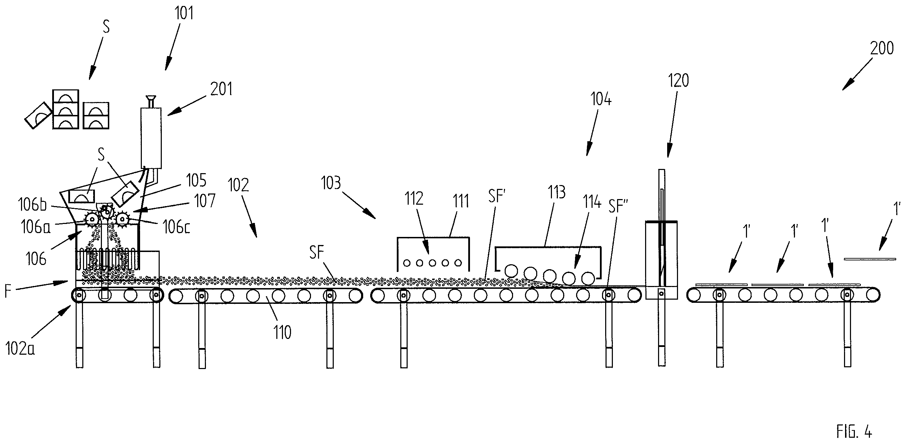

A variant embodiment of the process for making a product 1' is described with reference to the variant embodiment of the system 200 shown in Figure 4.

Said system 200 differs from the system 100 of Figure 1 in that it comprises a feeding unit 201 at the level of the hopper 105.

In preferred embodiments of the invention, in fact, other suitable elements are advantageously added to the scraps S, preferably through said feeding unit 201.

In a preferred embodiment of the invention, a bonding material is added to the scraps S. The bonding material preferably comprises a thermoplastic material that is mixed with the fragments F obtained from the grinding means 106. In the successive heat treatment step performed inside the oven 111, the added bonding material favours the cohesion of the fragments F.

The final product 1 obtained in this case actually still comprises a plurality of fragments F of polyethylene foam, advantageously recycled and joined together at the level of respective surface areas Fs, in which a certain quantity of bonding substance mixed with polyethylene foam will also be present.

In another preferred embodiment of the invention, a self-extinguishing additive is added to the scraps S.

This additive helps reduce the flammability and combustibility of the final product 1'.

In a further preferred embodiment of the invention another type of material is added to the scraps S, said material being capable of improving some specific characteristics of the final product, depending on the field of application of the product itself. For example, in the case of production of heat insulating panels, the added material can be constituted by fragments of rock wool, aluminium, cork, etc.

In other possible preferred embodiments of the invention, the additive elements can be different, for example they can be colouring substances.

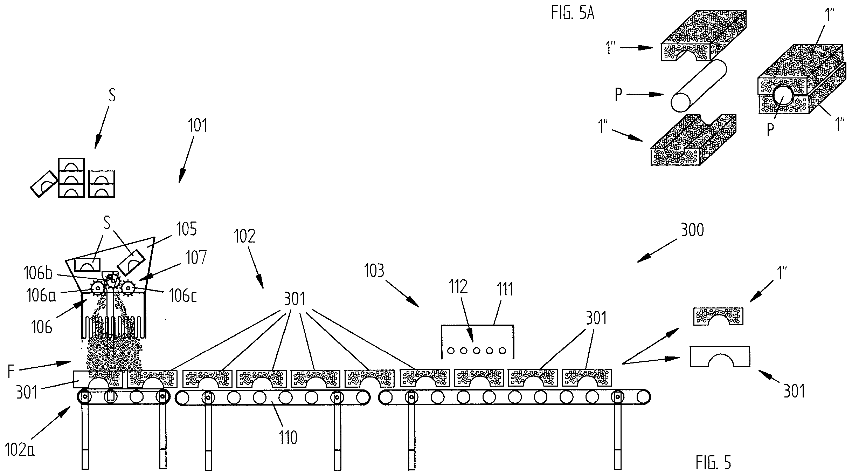

A variant implementation of the production process of a product 1" is described here below with reference to the variant embodiment of the system 300 shown in Figure 5.

In said proposed embodiment, the final product 1" has a special and shaped configuration (it is not in the shape of a mat or slab). The final product 1" with said shape, as shown in Figure 5A, can be conveniently used, for example, for packing an object P inside a box in order to protect the object P itself.

In said system 300, the fragments F leaving the grinding means 106 fall inside moulds 301 the shape of which advantageously matches the shape of the product 1" to be obtained. The moulds 301 are positioned on the conveyor belt 102. Preferably, a portion 110 of the conveyor belt 102 that transports the moulds 301 is constituted by a vibrating mat 110 that has the function to ensure that the fragments F fill the mould 301 as uniformly as possible.

The mould 301 containing the fragments F is then conveyed towards the heating means 103, preferably of the type previously described above.

The fragments F situated inside the mould 301 are therefore subjected to a heating treatment, as previously described.

The mould 301 with the cohered fragments F starts a cooling process at the end of the heating treatment, that is, when leaving the oven 111.

At the end of the cooling process, finally, the shaped product 1" can be extracted from the respective mould 301.

In a variant embodiment, inside the mould 301 and on the heat-treated fragments F leaving the oven 111, it is possible to perform a compacting action by means of suitable compacting means, for example through a vertical press.

Preferably, the compacting means act on the fragments when the latter have not cooled down completely yet.

Also this variant embodiment makes it possible to obtain all the advantages previously described.

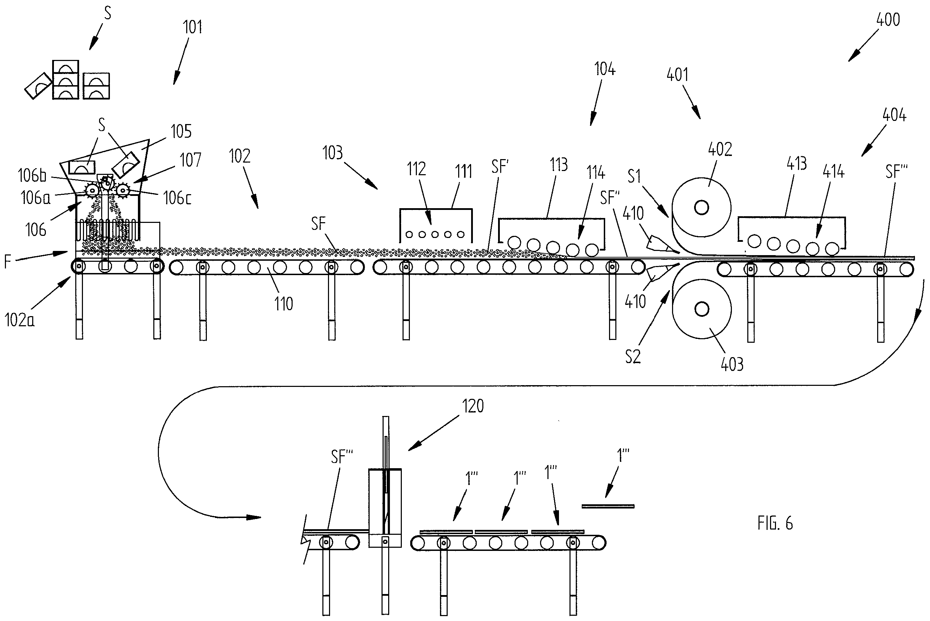

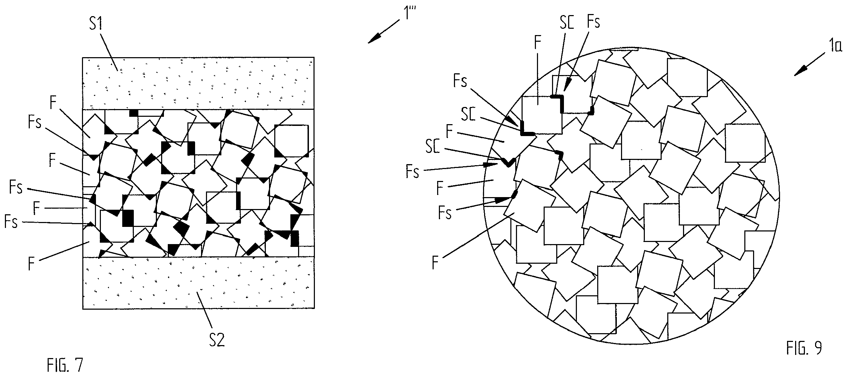

A variant embodiment of the production process of a product 1"' is described with reference to the variant embodiment of the system 400 shown in Figure 6, said product 1"' being better illustrated in the detail of Figure 7. In Figure 6 the system 400 is represented on two levels only for the purpose of saving space. Said system 400 differs from the system 100 of Figure 1 in that it comprises a coupling unit 401 preferably arranged downstream of the compacting means 104 and upstream of the cutting unit 120.

The final product 1"' obtained in this case comprises, in addition to a central layer containing a plurality of fragments F of polyethylene foam, substantially corresponding to the previously described product 1', also two layers S1 and S2 externally coupled with said central layer, as shown in the detail of Figure 7.

In the embodiment illustrated and described herein, the two layers S1 and S2 are constituted by respective layers of non-recycled polyethylene foam.

In variant embodiments of the invention, there may be a different number, one or more, of layers coupled with the layer containing fragments F of polyethylene, as well as layers made of a different material and suitable for the specific use intended for the final product 1"'.

The coupling unit 401 comprises one pair of reels 402 and 403 on which the corresponding films in polyethylene foam S1 and S2 are wound.

The films of polyethylene foam S1 and S2 are externally coupled with the uniform layer SF" of fragments F generated by the compacting means 104, that is, by the rolling unit 113. In order to favour said coupling operation, preferably, the uniform layer SF" and the two layers of polyethylene S1 and S2 are subjected to a heating process through heating means 410, comprising for example a pair of driers.

The contact surfaces of the uniform layer SF" and of the two layers of polyethylene S1 and S2 advantageously undergo a partial surface melting process that allows them to mutually adhere to one another. Downstream of the reels 402, 403 further compacting means 404 favour the mutual union of the three layers. The compacting means 404 preferably comprise a rolling unit 413 constituted by a set of rollers 414 that mutually press the various layers.

In variant embodiments, the compacting means can be made in a different manner, for example they can be constituted by a vertical press.

In further variant embodiments, the coupling can be carried out in a different manner, for example through the interpositon of a bonding substance between the various layers.

The uniform and compact layer SF"' that leaves the compacting means 404 is thus advantageously conveyed to a cutting unit 120 that cuts the layer to size in order to obtain the final product 1"'.

Preferably, the total thickness of the final product 1"' is included between 15 mm and 100 mm, more preferably included between 40 mm and 60 mm.

The thickness of each layer S1 and S2 is preferably included between 3 mm and 10 mm, more preferably it is equal to 5 mm.

It is evident that also in this embodiment one or more additive elements can be added, obviously adapting the system 400 for this purpose.

Also this variant embodiment makes it possible to achieve all the advantages described above.

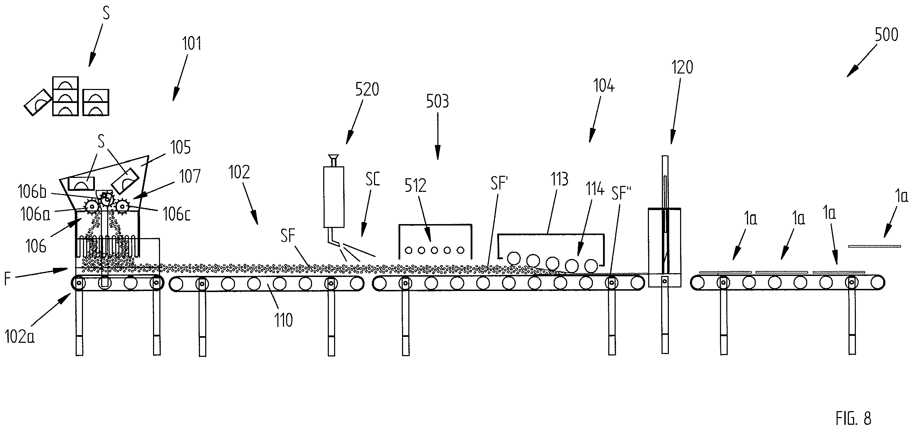

An exemplary production process of a product 1a is described with reference the system 500 shown in Figure 8, not forming part of the invention.

This system 500 differs from the system 100 of Figure 1 in that it comprises a dispensing unit 520 suited to dispense a bonding substance SC and catalyst means 503 of the bonding substance SC instead of the oven 111.

In this aspect, a bonding substance SC is preferably sprayed in an homogeneous manner on the uniform or substantially uniform layer SF of fragments F through the dispensing unit 520.

The uniform layer SF provided with the bonding substance SC is then conveyed towards the catalyst means 503.

Preferably, the catalyst means 503 comprise UV radiation means 512 suited to favour and accelerate the adhesive action of the bonding substance SC.

In variant aspects, the catalyst means 503 may be absent. In this case the bonding substance SC dries up at ambient temperature.

The successive compacting means 104 advantageously define the thickness of the uniform layer SF" by compacting the fragments F.

The uniform and compact layer SF" that leaves the compacting means 104 is then advantageously conveyed to a cutting unit 120 that cuts the layer to size in order to obtain the final product 1a.

The final product la obtained in this case comprises a plurality of fragments F of polyethylene foam, pressed and deformed, joined together by means of the bonding substance SC at the level of respective surface areas Fs, as schematically shown in Figure 9.

The above clearly shows that the method and the system proposed allow the set objects to be achieved.

In particular, it is clear that the proposed solution makes it possible to obtain a product of the type described above that allows the disposal costs of polyethylene foam waste products to be minimized.

Even though the invention has been described making reference to the attached drawings, upon implementation it can be subjected to modifications that all fall within the same inventive concept as defined by the claims attached hereto and protected by the present patent.

## Claims

1. Method for making a product (1; 1'; 1"; 1"') having a predetermined shape by using polyethylene foam scraps (S), comprising the following steps:
- fragmenting said scraps (S) in order to obtain a plurality of fragments (F) of polyethylene foam;
- joining said fragments (F) together in order to obtain a single body;
- forming said single body according to said predetermined shape in order to obtain said product (1; 1'; 1"; 1"'),
- positioning said fragments (F) on at least a conveyor belt (102) after the fragmenting step and during the joining step, and
**wherein** said step of joining said fragments (F) together in order to obtain said single body comprises a heat treatment step during which said fragments (F) are heated, said step being suited to allow said fragments (F) to be at least partially melted and their surfaces to form a whole with one another, **wherein** the heat treatment comprises passing said fragments (F) through an oven (111) **wherein** said steps in which said fragments (F) are joined together in order to make a single body and said single body is formed according to said predetermined shape in order to obtain said product (1") comprise a single step in which said plurality of fragments (F) of polyethylene foam are placed into a mould (301) that reproduces said predetermined shape, the method further comprising a step in which said plurality of fragments (F) are pressed inside said mould (301).

2. Method according to claim 1), **characterized in that** said heat treatment step includes the step in which said fragments (F) are subjected to a heating temperature included between 80°C and 120°C, more preferably included between 90°C and 110°C, even more preferably equal to 100°C.

3. Method according to claim 2), **characterized in that** said heat treatment includes the step of subjecting said fragments (F) to said heating temperature for a time that is proportional to the thickness of said product (1; 1'; 1"; 1'").

4. Method according to any of the preceding claims, **characterized in that** the size of each one of said fragments (F) is included between 5 mm and 35 mm, more preferably is included between 15 mm and 25 mm, even more preferably is substantially equal to 20 mm.

5. Method according to any of the claims from 1 to 4, **characterized in that** said step in which said single body is formed according to said predetermined shape in order to obtain said product (1; 1'; 1"; 1"') comprises a step in which said single body is pressed before it cools down.

6. Method according to any of the preceding claims, **characterized in that** it comprises a further step in which at least one additive element is added to said fragments (F) before said step of joining said fragments (F) together in order to make a single body.

7. Method according to claim 6, **characterized in that** said at least one additive element comprises an element belonging to the group comprising: a bonding material, a self-extinguishing material, a material with heat insulating properties, a colouring material.

8. Method according to any of the preceding claims, **characterized in that** said predetermined shape is the shape of a slab.

9. System (100; 200; 300; 400) for making a product (1; 1'; 1"; 1"') having a predetermined shape by using polyethylene foam scraps (S), comprising:
reduction means (101) suited to fragment said scraps (S) in such a way as to obtain a plurality of fragments (F) of polyethylene foam;
joining means (103) suited to join said fragments (F) together in order to make a single body;
forming means (104, 301) suited to form said single body according to said predetermined shape in order to obtain said product (1; 1'; 1"; 1"'),
a conveyor belt (102) between said reduction means (101) and said joining means (103),
and **wherein** said joining means (103) comprise an oven (111), wherein
said forming means comprise a mould (301) suited to accommodate said fragments (F).

10. System (100; 200) according to claim 9, **characterized in that** said forming means (104) comprise a pressing unit, preferably a rolling unit (113).

11. System (100; 200) according to claim 9, **characterized in that** at least one section (110) of said conveyor belt (102) vibrates, so as to allow the substantially uniform distribution of said fragments (F) on said belt.

12. System (100; 200) according to any of the claims from 9 to 11, **characterized in that** it comprises a cutting unit (120) located downstream of said forming means (104).

13. System (200) according to any of the claims from 9 to 12, **characterized in that** it furthermore comprises a feeding unit (201) for an additive material, arranged upstream of said joining means (103).

14. System (400) according to any of the claims from 9 to 13, **characterized in that** it furthermore comprises a coupling unit (401) located downstream of said joining means (103) and suited to couple one or more layers of a material with said single body.

## Patentansprüche

1. Verfahren zur Herstellung eines Produkts (1; 1'; 1"; 1"') mit einer vorbestimmten Form unter Verwendung von Polyethylenschaumstoff-Schnitzeln (S), folgende Schritte umfassend:
- Fragmentierung der besagten Schnitzel (S), um eine Vielzahl von Fragmenten (F) aus Polyethylenschaumstoff zu erhalten;
- Verbindung der besagten Fragmente (F) zur Erzielung eines einzelnen Körpers;
- Formung des besagten einzelnen Körpers der vorbestimmten Form gemäß, um das besagte Produkt (1; 1'; 1"; 1"') zu erhalten,
- Positionierung der besagten Fragmente (F) auf wenigstens einem Förderband (102) nach dem Fragmentierungsschritt und während des Verbindungsschritts, und
**wobei** der besagte Schritt der Verbindung der besagten Fragmente (F) miteinander zur Erzielung des besagten einzelnen Körpers einen Schritt der Wärmebehandlung umfasst, währenddessen die besagten Fragmente (F) erwärmt werden, wobei der besagte Schritt geeignet ist, die besagten Fragmente (F) wenigstens teilweise schmelzen und ihre Oberflächen miteinander ein Ganzes bilden zu lassen, **wobei** die Wärmebehandlung die Passage der besagten Fragmente (F) in einem Ofen (111) umfasst, **wobei** die besagten Schritte, in denen die besagten Fragmente (F) miteinander verbunden werden, um einen einzelnen Körper zu erzielen, und der besagte einzelne Körper der besagten vorbestimmten Form gemäß geformt wird, um das besagte Produkt (1") zu erhalten, einen einzelnen Schritt umfassen, in dem die besagte Vielzahl von Fragmenten (F) aus Polyethylenschaumstoff in ein Formwerkzeug (301) gefüllt werden, welches die besagte vorbestimmte Form reproduziert,
wobei das Verfahren des Weiteren einen Schritt umfasst, in dem die besagte Vielzahl von Fragmenten (F) in dem besagten Formwerkzeug (301) zusammengepresst werden.

2. Verfahren nach Patentanspruch 1, **dadurch gekennzeichnet, dass** der besagte Wärmebehandlungsschritt den Schritt umfasst, in dem die besagten Fragmente (F) einer Erwärmungstemperatur (T) zwischen 80 °C und 120 °C ausgesetzt werden, besonders bevorzugt zwischen 90 °C und 110 °C, und noch bevorzugter gleich 100 °C.

3. Verfahren nach Patentanspruch 2), **dadurch gekennzeichnet, dass** die besagte Wärmebehandlung den Schritt der Einwirkung der besagten Erwärmungstemperatur auf die besagten Fragmente (F) über einen Zeitraum umfasst, der proportional zu der Dicke des besagten Produkts (1; 1'; 1"; 1"') ist.

4. Verfahren nach einem jeglichen der vorstehenden Patentansprüche, **dadurch gekennzeichnet, dass** die Größe jedes der besagten Fragmente (F) zwischen 5 mm und 35 mm liegt, besonders bevorzugt zwischen 15 mm und 25 mm, und noch bevorzugter im Wesentlichen gleich 20 mm.

5. Verfahren nach einem jeglichen der Patentansprüche von 1 bis 4, **dadurch gekennzeichnet, dass** der besagte Schritt, in dem der besagte einzelne Körper der besagten vorbestimmten Form gemäß geformt wird, um das besagte Produkt (1; 1'; 1"; 1"') zu erhalten, einen Schritt umfasst, in dem der besagte einzelne Körper gepresst wird, bevor er auskühlt.

6. Verfahren nach einem jeglichen der vorstehenden Patentansprüche, **dadurch gekennzeichnet, dass** es vor dem besagten Schritt der Verbindung der besagten Fragmente (F) zur Herstellung eines einzelnen Körpers einen weiteren Schritt umfasst, in dem wenigstens ein Zuschlagelement zu den besagten Fragmenten (F) hinzugefügt wird.

7. Verfahren nach Patentanspruch 6, **dadurch gekennzeichnet, dass** das besagte wenigstens eine Zuschlagelement ein Element umfasst, das zu der Gruppe gehört, die Folgendes umfasst: ein Bindemittel, ein selbstlöschendes Material, ein Material mit wärmeisolierenden Eigenschaften, ein Farbstoff.

8. Verfahren nach einem jeden der vorstehenden Patentansprüche, **dadurch gekennzeichnet, dass** die besagte vorbestimmte Form die Form einer Platte ist.

9. System (100; 200; 300; 400) zur Herstellung eines Produkts (1; 1'; 1"; 1"') mit einer vorbestimmten Form durch Einsatz von Polyethylenschaumstoff-Schnitzeln (S), Folgendes umfassend:
Zerkleinerungsmittel (101), dazu geeignet, die besagten Schnitzel (S) derart zu fragmentieren, dass eine Vielzahl von Fragmenten (F) aus Polyethylenschaumstoff erhalten wird;
Verbindungsmittel (103), dazu geeignet, die besagten Fragmente (F) zur Erzielung eines einzelnen Körpers miteinander zu verbinden;
Formungsmittel (104, 301), dazu geeignet, den besagten einzelnen Körper der vorbestimmten Form gemäß zu formen, um das besagte Produkt (1; 1'; 1"; 1"') zu erhalten;
ein Förderband (102) zwischen den besagten Zerkleinerungsmitteln (101) und den besagten Verbindungsmitteln (103);
und **wobei** die besagten Verbindungsmittel (103) einen Ofen (111) umfassen,
**wobei** die besagten Formungsmittel ein Formwerkzeug (301) umfassen, das dazu geeignet ist, die besagten Fragmente (F) aufzunehmen.

10. System (100; 200) nach Patentanspruch 9, **dadurch gekennzeichnet, dass** die besagten Formungsmittel (104) eine Presseinheit umfassen, vorzugsweise eine Rolleneinheit (113).

11. System (100; 200) nach Patentanspruch 9, **dadurch gekennzeichnet, dass** wenigstens ein Abschnitt (110) des besagten Förderbands (102) vibriert, so dass eine im Wesentlichen gleichmäßige Verteilung der besagten Fragmente (F) auf dem besagten Band ermöglicht wird.

12. System (100; 200) nach einem jeglichen der Patentansprüche von 9 bis 11, **dadurch gekennzeichnet, dass** es eine Schneideeinheit (120) umfasst, die den besagten Formungsmitteln (104) nachgelagert angeordnet ist.

13. System (200) nach einem jeglichen der Patentansprüche von 9 bis 12, **dadurch gekennzeichnet, dass** es des Weiteren eine Zuführeinheit (201) für ein Zuschlagmaterial umfasst, die den besagten Verbindungsmitteln (103) vorgelagert angeordnet ist.

14. System (400) nach einem jeglichen der Patentansprüche von 9 bis 13, **dadurch gekennzeichnet, dass** es des Weiteren eine Verbindungseinheit (401) umfasst, die den besagten Verbindungsmitteln (103) nachgelagert angeordnet und geeignet ist, eine oder mehrere Schichten eines Materials mit dem besagten einzelnen Körper zu verbinden.

## Revendications

1. Méthode pour la réalisation d'un produit (1 ; 1' ; 1" ; 1"') ayant une forme prédéterminée en utilisant des déchets de mousse de polyéthylène (S), comprenant les phases suivantes :
- fragmentation desdits déchets (S) de manière à obtenir une pluralité de fragments (F) de mousse de polyéthylène ;
- union desdits fragments (F) de manière à obtenir un corps unique ;
- formation dudit corps unique selon ladite forme prédéterminée de manière à obtenir ledit produit (1 ; 1' ; 1" ; 1"'),
- positionnement desdits fragments (F) sur au moins une bande transporteuse (102) après la phase de fragmentation et durant la phase d'union, et
**où** ladite phase d'union réciproque desdits fragments (F) de façon à obtenir ledit corps unique comprend une phase de traitement thermique durant lequel lesdits fragments (F) sont réchauffés, ladite phase étant indiquée pour consentir que lesdits fragments (F) puissent au moins partiellement être fondus et leurs surfaces puissent former un tout, **où** le traitement thermique comprend le passage desdits fragments (F) à travers un four (111) **où** lesdites phases dans lesquelles lesdits fragments (F) se rassemblent de façon à réaliser un corps unique et ledit corps unique est formé selon ladite phase prédéterminée de manière à obtenir ledit produit (1") comprennent une phase unique dans laquelle ladite pluralité de fragments (F) de mousse de polyéthylène sont positionnés dans un moule (301) qui reproduit ladite phase prédéterminée,
la méthode comprenant en outre une phase dans laquelle ladite pluralité de fragments (F) est pressée dans ledit moule (301).

2. Méthode selon la revendication 1), **caractérisée en ce que** ladite phase de traitement thermique comprend la phase dans laquelle lesdits fragments (F) sont soumis à une température de chauffe comprise entre 80 °C et 120 °C, plus préférablement comprise entre 90 °C et 110 °C, encore plus préférablement égale à 100 °C.

3. Méthode selon la revendication 2), **caractérisée en ce que** ledit traitement thermique comprend la phase de soumission desdits fragments (F) à ladite température de chauffe pendant un temps qui est proportionnel à l'épaisseur dudit produit (1 ; 1' ; 1" ; 1"').

4. Méthode selon l'une quelconque des revendications précédentes, **caractérisée en ce que** la dimension de chacun desdits fragments (F) est comprise entre 5mm et 35mm, plus préférablement est comprise entre 15mm et 25mm, encore plus préférablement est essentiellement égale à 20mm.

5. Méthode selon l'une quelconque des revendications de 1 à 4, **caractérisée en ce que** ladite phase dans laquelle ledit corps unique est formé selon ladite forme prédéterminée de manière à obtenir ledit produit (1 ; 1' ; 1" ; 1"') comprend une phase dans laquelle ledit corps unique est pressé avant qu'il se refroidit.

6. Méthode selon l'une quelconque des revendications précédentes, **caractérisée en ce qu'**elle comprend une ultérieure phase dans laquelle au moins un élément supplémentaire est ajouté auxdits fragments (F) avant ladite phase d'union desdits fragments (F) de manière à réaliser un corps unique.

7. Méthode selon la revendication 6, **caractérisée en ce qu'**au moins un élément supplémentaire comprend un élément appartenant au groupe comprenant: un matériau de liaison, un matériau auto extinguible, un matériau avec des propriétés d'isolation thermique, un matériau de coloration.

8. Méthode selon l'une quelconque des revendications précédentes, **caractérisée en ce que** ladite forme prédéterminée est la forme d'une dalle.

9. Système (100 ; 200 ; 300 ; 400) pour la réalisation d'un produit (1 ; 1' ; 1" ; 1"') ayant une forme prédéterminée en utilisant des déchets de mousse de polyéthylène (S), comprenant:
des moyens de réduction (101) aptes à fragmenter lesdits déchets (S) de manière à obtenir une pluralité de fragments (F) de mousse de polyéthylène;
des moyens d'union (103) aptes à unir lesdits fragments (F) de manière à réaliser un corps unique;
des moyens de formation (104, 301) aptes à former ledit corps unique selon ladite forme prédéterminée de manière à obtenir ledit produit (1 ; 1' ; 1" ; 1"'),
une bande transporteuse (102) entre lesdits moyens de réduction (101) et lesdits moyens d'union (103),
et **où** lesdits moyens d'union (103) comprennent un four (111),
**où** lesdits moyens de formation comprennent un moule (301) apte à loger lesdits fragments (F).

10. Système (100 ; 200) selon la revendication 9, **caractérisé en ce que** lesdits moyens de formation (104) comprennent une unité de pressage, préférablement une unité de roulage (113).

11. Système (100 ; 200) selon la revendication 9, **caractérisée en ce qu'**au moins une section (110) de ladite bande transporteuse (102) vibre, de manière à permettre la distribution essentiellement uniforme desdits fragments (F) sur ladite bande.

12. Système (100 ; 200) selon l'une quelconque des revendications de 9 à 11, **caractérisé en ce qu'**il comprend une unité de coupe (120) disposée enaval desdits moyens de formation (104).

13. Système (200) selon l'une quelconque des revendications de 9 à 12, **caractérisé en ce qu'**il comprend en outre une unité d'alimentation (201) pour un matériau additif, disposée en amont desdits moyens d'union (103).

14. Système (400) selon l'une quelconque des revendications de 9 à 13, **caractérisé en ce qu'**il comprend en outre une unité d'accouplement (401) positionnée en aval desdits moyens d'union (103) et apte à relier une ou plusieurs couches de matériau avec ledit corps unique.
